# EUROPEAN PATENT APPLICATION

(11) **EP 2 891 585 A1**
(43) Date of publication of application: **08.07.2015**
(21) Application number: 13832065.0
(22) Date of filing: 01.03.2013
(51) Int. Cl.: B60T 7/04, B60T 7/06, B60T 13/02, G05G 1/30

(54) **BRAKE PEDAL DEVICE AND ATTACHMENT METHOD THEREFOR**

(30) Priority: 31.08.2012 WO PCT/JP2012/072248
(71) Applicant: Yorozu Corporation, Yokohama-shi, Kanagawa 222-8560 (JP)
(72) Inventor: ISHIZUKI, Masaharu, Yokohama-shi Kanagawa 222-8560 (JP); MATSUDA, Tomoya, Yokohama-shi Kanagawa 222-8560 (JP); TABATA, Shota, Yokohama-shi Kanagawa 222-8560 (JP)
(74) Representative: Martin, Didier Roland Valéry
(86) International application number: PCT/JP2013/055726
(87) International publication number: WO 2014/034159

(57) **Abstract**

The present invention provides a brake pedal device which one worker can easily attach, and an attachment method therefor. This brake pedal device has: a master cylinder (10) for holding a push rod (14) for producing brake-fluid pressure; a pedal box (20) for axially supporting a brake pedal (21) so as to be rotatable around a bracket part (22) ; and an immobilizing part (30) capable of immobilization from the vehicle-compartment side in relation to a dash panel (40) in which a through-hole (40A), into which the master cylinder can be inserted, is formed. Therein: the master cylinder, the pedal box, and the immobilizing part configure an assembly which is integrally connected by connecting the push rod to the brake pedal; and the assembly is configured so as to be capable of immobilization in relation to the dash panel from the vehicle-compartment side, by immobilizing the immobilizing part from the vehicle-compartment side in relation to the dash panel while at least a portion of the master cylinder in the axial direction thereof is inserted into the through-hole.

## Description

### TECHNICAL FIELD

The present invention relates to a brake pedal device and an attachment method thereof.

### BACKGROUND ART

Generally, a brake pedal device for a gasoline engine automobile includes a brake pedal box which includes a brake pedal to be stepped by a driver, a master vac which amplifies a stepping load of the brake pedal by a negative pressure of an engine, and a master cylinder which generates a brake liquid pressure (for example, see Patent Literature 1).

In such a brake pedal device, since the size of the master vac is large, two workers attach the brake pedal box, the master vac, and the master cylinder in an alignment state by carrying the brake pedal box from the vehicle interior side of the dash panel and carrying the master vac and the master cylinder from the engine room side of the dash panel.

Recently, there has been a tendency of adopting a system in which a conventional negative pressure generated by an engine for operating a master vac is switched to a negative pressure generated from a negative pressure pump operated by an electric motor. Thus, there is a possibility that the master vac may be eliminated due to the upgrade of the entire system.

### Citation List

### Patent Literatures

Patent Literature 1: JP 2009-251674 A

### SUMMARY OF INVENTION

### Technical Problem

As described above, in the brake pedal device disclosed in Patent Literature 1, since two workers conduct the attachment operation at both the vehicle interior side and the engine room side with the dash panel interposed therebetween, the man cost increases and the alignment operation is troublesome.

The invention is contrived to solve the above-describedproblems of the related art, and an object thereof is to provide a brake pedal device which is easily attached by one worker when a master vac is eliminated and an attachment method thereof.

### Means for Solving Problem

The above-described object is achieved by the invention described in (1) to (7).
(1) A brake pedal device including: a master cylinder which holds a push rod for generating a brake liquid pressure; a pedal box which rotatably and axially supports a brake pedal to a bracket portion; and a fixed portion which is fixable to a dashpanel, provided with a penetration hole through which the master cylinder is insertable, from a vehicle interior, wherein the master cylinder, the pedal box, and the fixed portion form an assembly in which these members are integrally connected to one another by connecting the push rod to the brake pedal, and wherein the assembly is fixable to the dash panel from the vehicle interior in a manner such that the fixed portion is fixed to the dash panel from the vehicle interior while at least a part of the master cylinder in the axial direction is inserted through the penetration hole.
(2) The brake pedal device according to (1), wherein the master cylinder, the bracket portion, and the fixed portion integrally form an auxiliary assembly, wherein the dash panel includes a first coupling member, wherein the fixed portion includes a flange portion which is fixed to a rear end side position of the master cylinder in relation to a front end as a front end side position of the master cylinder in the insertion direction of the master cylinder with respect to the penetration hole, and wherein the fixed portion is fixed to the dash panel in a manner such that a second coupling member is coupled to the first coupling member through a hole portion formed through the flange portion.
(3) The brake pedal device according to (2), wherein the auxiliary assembly is integrally formed by aluminum die-casting.
(4) The brake pedal device according to (1), wherein the dash panel includes a first coupling member, and wherein the fixed portion includes a flange portion which is fixed to a rear end side position of the master cylinder in relation to a front end as a front end side position of the master cylinder in the insertion direction of the master cylinder with respect to the penetration hole, a fixed hole which is formed through the flange portion, and a second coupling member which is coupled to the first coupling member through the fixed hole.
(5) The brake pedal device according to any one of (1) to (4), wherein the pedal box further includes a brake booster which transmits a stepping load of the brake pedal to the push rod while changing the amplification factor thereof.
(6) The brake pedal device according to (5), wherein the brake booster is a link mechanism.
(7) A method of attaching the brake pedal device according to any one of (1) to (6) to the dash panel, including: inserting at least a part of the master cylinder of the assembly in the axial direction through the penetration hole of the dash panel from the vehicle interior; and fixing the fixed portion to the dash panel from the vehicle interior so as to fix the brake pedal device to the dash panel from the vehicle interior.

### Advantageous Effect of the Invention

According to the invention of (1), the assembly in which the master cylinder, the pedal box, and the fixed portion are integrally connected to one another is fixed to the dash panel from the vehicle interior. For this reason, it is possible to provide the brake pedal device which may be easily attached by one worker.

According to the invention of (2), since the precision of the auxiliary assembly obtained by integrating the master cylinder, the bracket portion, and the fixed portion is improved, it is possible to provide the highly precise brake pedal device.

According to the invention of (3), since the auxiliary assembly is integrally formed by aluminum die-casting, it is possible to provide the brake pedal device which is decreased in weight and cost.

According to the invention of (4), since the assembly is fixed to the dash panel by coupling the first coupling member and the second coupling member to each other through the fixed hole formed through the flange portion, the fixing operation is easy.

According to the invention of (5), since the pedal box is provided with the brake booster, there is no need to provide the electric motor provided in the electric automobile or the hybrid vehicle so as to generate a negative pressure. Further, since the brake booster is used instead of the master vac attached to the gasoline engine automobile, the invention may be also applied to the gasoline engine automobile. Further, since the brake booster may transmit the stepping load of the brake pedal to the push rod while changing the amplification factor thereof, a desired amplified force may be transmitted to the push rod.

According to the invention of (6), since a desired lever ratio maybe obtained by appropriately changing the position of the support shaft of the link mechanism, a desired amplified force may be transmitted to the push rod.

According to the invention of (7), the assembly is inserted through the penetration hole of the dash panel, and the fixed portion is fixed to the dash panel from the vehicle interior so as to fix the assembly to the dash panel. For this reason, it is possible to provide the method of attaching the brake pedal device which may be easily attached by one worker.

### BRIEF DESCRIPTION OF DRAWINGS

Fig. 1 is a diagram illustrating a brake pedal device according to a first embodiment of the invention.
Fig. 2 is a perspective view illustrating a flange portion and a pedal box of the brake pedal device according to the first embodiment.
Fig. 3 is a perspective view illustrating a configuration of a brake booster as a link mechanism.
Fig. 4 is a diagram illustrating a characteristic of a load amplification factor of the brake booster.
Fig. 5 is a diagram illustrating a state before an inserting step of a method of attaching the brake pedal device according to the embodiment.
Fig. 6 is a diagram illustrating a state after the inserting step of the method of attaching the brake pedal device according to the embodiment.
Fig. 7 is a diagram illustrating a state after a fixing step of the method of attaching the brake pedal device according to the embodiment.
Fig. 8 is a diagram illustrating a brake pedal device according to a second embodiment of the invention.
Fig. 9 is a diagram illustrating an assembly according to the second embodiment.

### DESCRIPTION OF EMBODIMENTS

### <First Embodiment>

Hereinafter, a first embodiment of the invention will be described with reference to the drawings. Furthermore, there is a case where the dimension scale in the drawings is different from the actual scale since the scale is exaggerated for the convenience of description.

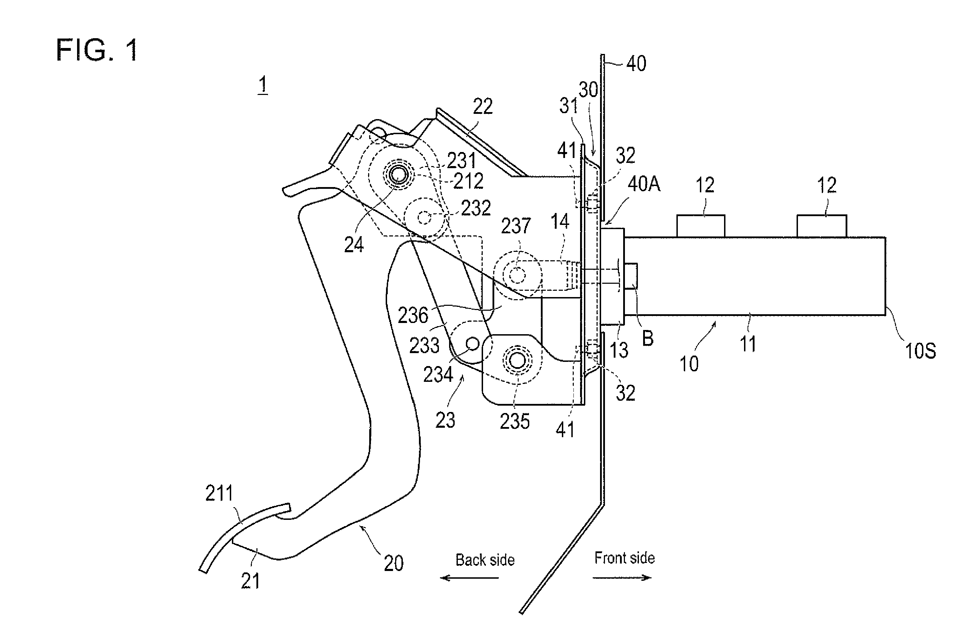

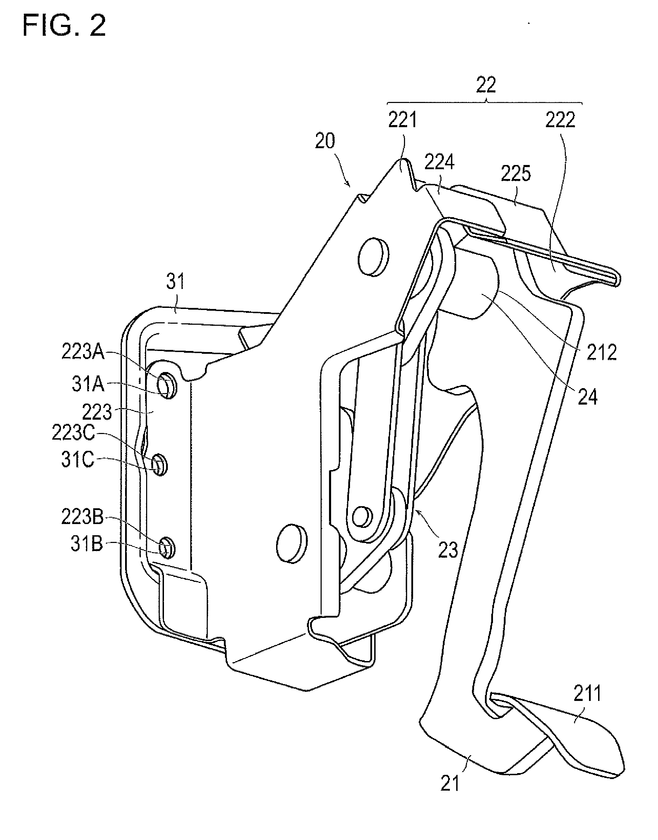

Fig. 1 is a diagram illustrating a brake pedal device 1 according to an embodiment. Fig. 2 is a perspective view illustrating a flange portion 31 and a pedal box 20 of the brake pedal device 1 according to the embodiment.

In general, as shown in Figs. 1 and 2, the brake pedal device 1 includes a master cylinder 10 which holds a push rod 14 for generating a brake liquid pressure, the pedal box 20 which rotatably and axially supports a brake pedal 21 to a bracket portion 22, and a fixed portion 30 which is fixable to a dash panel 40, provided with a penetration hole 40A through which the master cylinder 10 is insertable, from a vehicle interior.

Further, the master cylinder 10, the pedal box 20, and the fixed portion 30 form an assembly in which these members are integrally connected to one another by connecting the push rod 14 to the brake pedal 21. The assembly is fixable to the dash panel 40 from the vehicle interior by fixing the fixed portion 30 to the dash panel 40 from the vehicle interior while the master cylinder 10 is inserted through the penetration hole 40A.

The dash panel 40 includes stud bolts 41 which protrude toward the vehicle interior. Furthermore, in the embodiment, the stud bolts 41 serve as first coupling members.

The fixed portion 30 includes the flange portion 31 which is fixed to a rear end side position of the master cylinder 10 in relation to a front end 10S as a front end side position of the master cylinder in the insertion direction of the master cylinder with respect to the penetration hole 40A, fixed holes 31A and 31B (see Fig. 2) which are formed through the flange portion 31 and through which the stud bolts 41 are inserted, and fixed nuts 32 (see Fig. 1) which are coupled to the stud bolts 41 inserted through the fixed holes 31A and 31B. Furthermore, in the embodiment, the fixed nuts 32 serve as second couplingmembers. Hereinafter, this configuration will be described in detail.

The master cylinder 10 brakes a tire of an automobile by generating a brake liquid pressure. As shown in Fig. 1, the master cylinder 10 includes a master cylinder body 11, a reservoir tank 12, a master cylinder connection portion 13, and a push rod 14.

The master cylinder body 11 includes a piston (not shown) and a return spring (not shown) therein.

The reservoir tank 12 supplies oil to the master cylinder body 11.

The master cylinder connection portion 13 is connected to the flange portion 31. The master cylinder connection portion 13 includes a connection hole (not shown) through which a coupling bolt B for coupling the master cylinder 10, the flange portion 31, and the bracket portion 22 is inserted.

The push rod 14 generates the brake liquid pressure by pushing the piston inside the master cylinder body 11. The push rod 14 is formed such that one end has a U-shape and the other end has a cylindrical shape. Here, the push rod is rotatably and axially supported to a third support shaft 237 while the other end of a third link 236 of a brake booster 23 to be described later is nipped in the U-shaped gap portion, and pushes the piston inside the master cylinder 10.

The pedal box 20 transmits a driver's stepping load to the cylinder inside the master cylinder 10. The pedal box 20 includes the brake pedal 21 on which the driver steps, the bracket portion 22 which axially supports a support shaft 24 having the brake pedal 21 fixed thereto, and the brake booster 23 which transmits the stepping load of the brake pedal 21 to the push rod 14 while changing the amplification factor thereof.

The brake pedal 21 has a curved shape and is formed such that one end is provided with a plate member 211 which is stepped when the driver decelerates or stops the automobile and the other end is provided with a fixed hole 212 having the support shaft 24 fixed thereto. Furthermore, the brake pedal 21 and the support shaft 24 are fixed to each other by, for example, welding, but the invention is not limited thereto.

As shown in Fig. 2, the bracket portion 22 includes a first bracket 221 and a second bracket 222.

The first bracket 221 includes a first flange 223 and a second flange 224. The first flange 223 is provided with penetration holes 223A and 223B which are formed at the positions corresponding to the fixed holes 31A and 31B of the flange portion 31 and through which the stud bolts 41 are inserted and a penetration hole 223C which is formed at the position corresponding to the connection hole of the master cylinder connection portion 13 and through which the coupling bolt B is inserted.

The second bracket 222 includes a third flange (not shown) and a fourth flange 225. The third flange includes three penetration holes (not shown) similarly to the first flange 223. The fourth flange 225 is disposed so that the outer periphery is covered by the second flange 224.

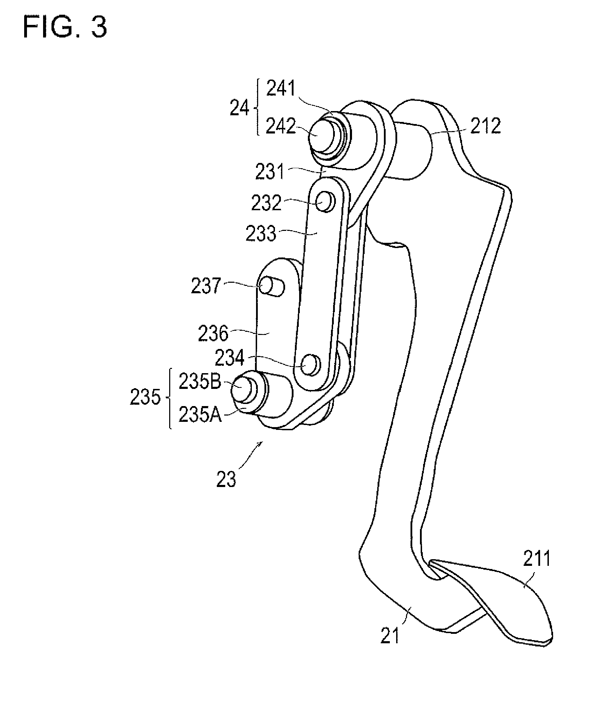

Fig. 3 is a perspective view illustrating the brake booster 23 as a link mechanism.

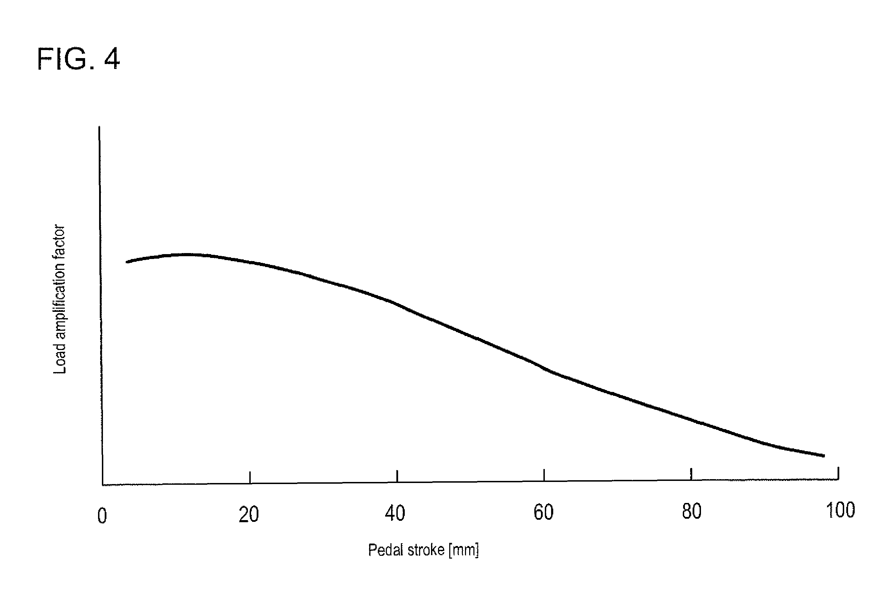

As shown in Fig. 3, the brake booster 23 includes a first link 231 which is formed in a linear shape such that one end is fixed to the support shaft 24 while being offset from the brake pedal 21 in the axial direction of the support shaft 24 and the other end is rotatably and axially supported to a first support shaft 232 provided at the side of the master cylinder 10 and the lower side of the support shaft 24. Further, the brake booster 23 includes a second link 233 which is formed in a linear shape such that one end is rotatably and axially supported to the first support shaft 232 and the other end is rotatably and axially supported to a second support shaft 234 provided at the side of the master cylinder 10 and the lower side of the first support shaft 232. Further, the brake booster 23 includes a third link 236 which is formed in an L-shape such that one end is rotatably and axially supported to the second support shaft 234 and the other end is rotatably and axially supported to the third support shaft 237 provided at the side of the master cylinder 10 and the upper side of the second support shaft 234 and is rotatably and axially supported to a fourth support shaft 235 fixed to the bracket portion 22 at an intersection portion of two lines of the L-shape. Since the brake booster 23 has the above-described geometry, the brake booster has a characteristic of a load amplification factor in which the stepping load of the brake pedal 21 is transmitted to the push rod 14 while being changed as shown in Fig. 4.

The support shaft 24 includes an outer support shaft 241 which is fixed to the brake pedal 21 and the first link 231 and has a hollow shape and an inner support shaft 242 which is disposed inside the outer support shaft 241 in a slidable manner and is axially supported to the bracket portion 22.

The fourth support shaft 235 includes an outer fourth support shaft 235A which is fixed to the intersection portion and has a hollow shape and an inner fourth support shaft 235B which is fixed to the bracket portion 22 while being disposed inside the outer fourth support shaft 235A in a slidable manner.

Although not shown in the drawings, one end of each of the inner support shaft 242, the first support shaft 232, the second support shaft 234, and the third support shaft 237 has a flange shape having a diameter larger than the insertion hole through which each of the shafts is inserted and the other end thereof is provided with a groove portion formed along the outer periphery thereof. Accordingly, the leakage of the shaft is prevented by fitting a C-ring to the groove portion. Furthermore, the leakage preventing method is not limited thereto.

The fixed portion 30 fixes the master cylinder 10 to the dash panel 40. The fixed portion 30 includes the flange portion 31 and the fixed nuts 32.

The flange portion 31 is fixed to the bracket portion 22. Specifically, as shown in Fig. 2, the flange portion includes the fixed holes 31A and 31B which are provided at the positions corresponding to the penetration holes 223A and 223B of the bracket portion 22 and through which the stud bolts 41 are inserted. Further, the flange portion 31 includes a fixed hole 31C which is provided at the position corresponding to the connection hole of the master cylinder connection portion 13 and the penetration hole 223C of the first flange 223 and through which the coupling bolt B is inserted. Furthermore, in Fig. 2, the fixed holes 31A and 31B and the fixed hole 31C are depicted only at the left side of the flange portion 31 for convenience of the description in the drawings, but the fixed holes are also present at the right side of the flange portion 31.

Next, an effect of the brake pedal device according to the embodiment will be described.

When the driver steps on the brake pedal 21, the support shaft 24 fixed to the brake pedal 21 rotates, and the first link 231 fixed to the support shaft 24 rotates about the support shaft 24 in synchronization with the brake pedal stepping operation.

When the first link 231 rotates about the support shaft 24, the first support shaft 232 is lifted upward, and the second support shaft 234 is also lifted upward by the second link 233. When the second support shaft 234 is lifted upward, the third link 236 rotates about the fourth support shaft 235 and the third support shaft 237 moves toward the master cylinder 10 since the third link 236 is rotatably and axially supported to the fourth support shaft 235 at the intersection portion.

Since the third support shaft 237 moves toward the master cylinder 10, the push rod 14 of which one end is rotatably and axially supported to the third support shaft 237 pushes the piston inside the master cylinder 10. Accordingly, the oil from the reservoir tank 12 is compressed and the brake liquid pressure is generated.

When the driver releases a foot from the brake pedal 21, the piston is pushed back by the return spring, and hence the brake liquid pressure is not generated.

Next, a method of attaching the brake pedal device 1 according to the embodiment will be described.

First, as shown in Fig. 2, the pedal box 20 and the flange port ion 31 are disposed so that the penetration holes 223A, 223B, and 223C respectively match the fixed holes 31A, 31B, and 31C, and the master cylinder 10 is attached from the front side of the flange portion 31 so as to form the assembly (an assembly forming step).

Specifically, in the state where the master cylinder connection portion 13 abuts against the flange portion 31 from the front side of the flange portion 31 so that the connection hole, the fixed hole 31C, and the penetration hole 223C match one another, the coupling bolt B is inserted through the master cylinder connection portion 13, and a nut (not shown) is coupled thereto from the first flange 223. By this step, the master cylinder 10, the pedal box 20, and the fixed portion 30 are integrally connected to one another so as to form the assembly.

Next, the brake pedal device 1 which is formed as the assembly is mounted to the vehicle interior, and the master cylinder 10 is inserted through the penetration hole 40A of the dash panel 40 (an inserting step).

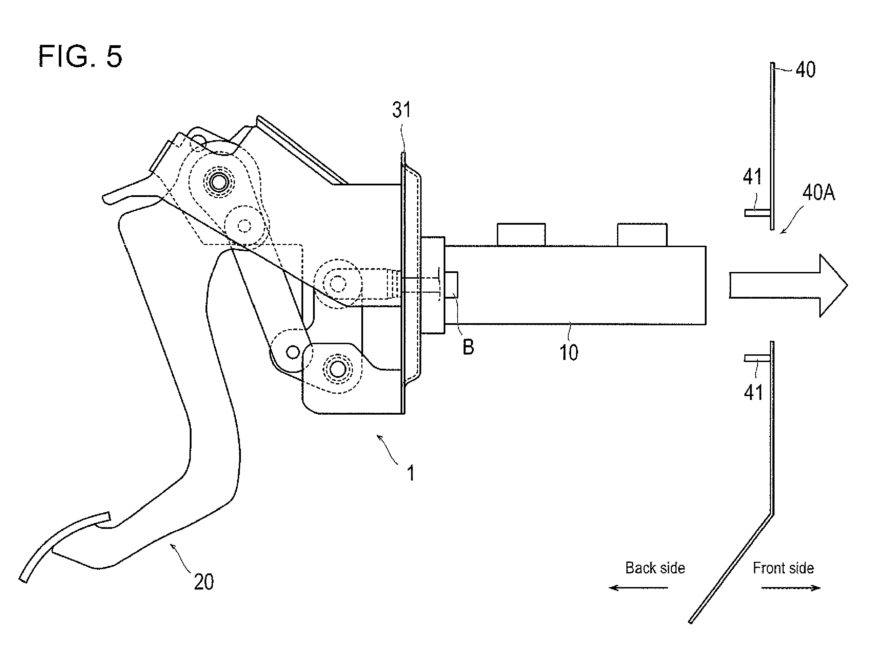

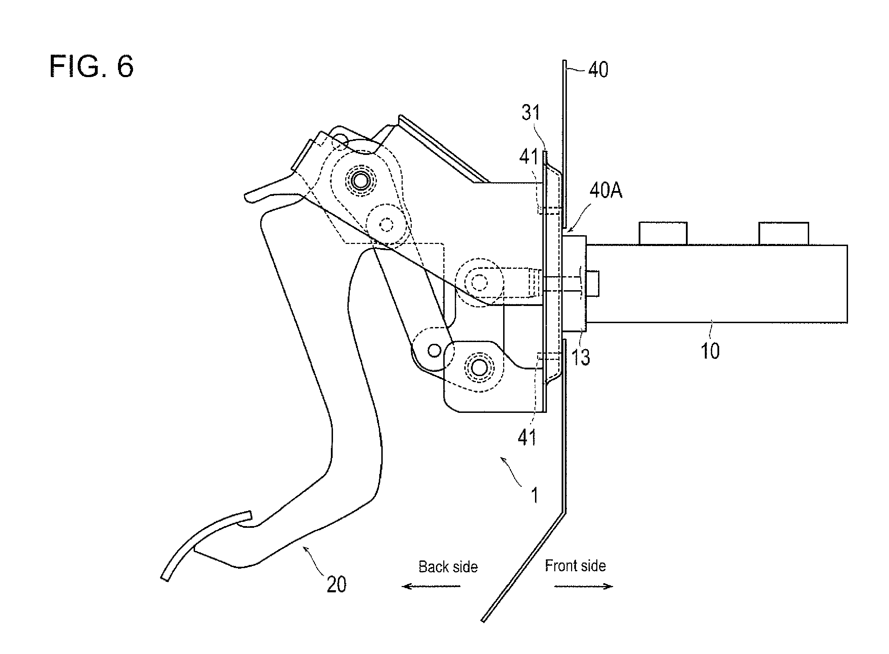

Fig. 5 is a diagram illustrating a state before the inserting step of the method of attaching the brake pedal device 1 according to the embodiment. Fig. 6 is a diagram illustrating a state after the end of the inserting step of the method of attaching the brake pedal device 1 according to the embodiment.

Specifically, as shown in Fig. 5, the brake pedal device 1 is set to a position where the master cylinder 10 is insertable through the penetration hole 40A. Then, the brake pedal device 1 is pushed forward from the vehicle interior so that the master cylinder 10 is inserted through the penetration hole 40A. At this time, the brake pedal device 1 is pushed in the rotation state so that the stud bolt 41 is inserted through the penetration hole 223A and the fixed hole 31A and the studbolt 41 is inserted through the penetration hole 223B and the fixed hole 31B. Then, as shown in Fig. 6, the brake pedal device is pushed until a front surface of the flange portion 31 contacts the dash panel 40.

Next, the fixed portion 30 is fixed to the dash panel 40 from the vehicle interior, and the brake pedal device 1 is fixed to the dash panel 40 from the vehicle interior (a fixing step).

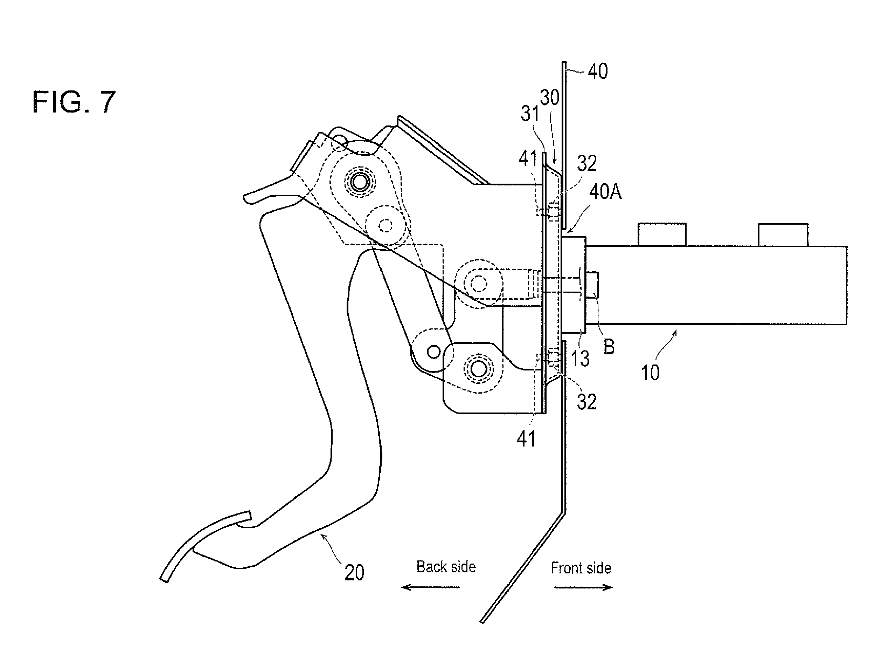

Fig. 7 is a diagram illustrating a state after the fixing step of the method of attaching the brake pedal device 1 according to the embodiment ends.

Specifically, as shown in Fig. 7, the fixed nut 32 is fastened to the stud bolt 41 protruding toward the vehicle interior so as to fix the brake pedal device 1 as the assembly to the dash panel 40.

Through the above-described steps, the brake pedal device 1 is attached to the dash panel 40.

As described above, the brake pedal device 1 according to the embodiment includes the master cylinder 10 which holds the push rod 14 for generating the brake liquid pressure, the pedal box 20 which rotatably and axially supports the brake pedal 21 to the bracket portion 22, and the fixed portion 30 which is fixable to the dash panel 40, provided with the penetration hole 40A through which the master cylinder 10 is insertable, from the vehicle interior. Further, the master cylinder 10, the pedal box 20, and the fixed portion 30 form the assembly in which these members are integrally connected to one another by connecting the push rod 14 to the brake pedal 21. The assembly maybe fixed to the dash panel 40 from the vehicle interior by fixing the fixed portion 30 to the dash panel 40 from the vehicle interior while the master cylinder 10 is inserted through the penetration hole 40A. For this reason, it is possible to provide the brake pedal device 1 which may be easily attached by one worker.

Further, the dash panel 40 includes the stud bolts 41 which protrude toward the vehicle interior, and the fixed portion 30 includes the flange portion 31 which is fixed to the bracket portion 22 and is fixed to the rear end side position of the master cylinder 10 in relation to the front end 10S as the front end side position of the master cylinder in the insertion direction of the master cylinder with respect to the penetration hole 40A, the fixed holes 31A and 31B which are formed through the flange portion 31 and through which the stud bolts 41 are inserted, and the fixed nuts 32 which are coupled to the stud bolts 41 inserted through the fixed holes 31A and 31B. Thus, since the assembly is inserted through the penetration hole 41A of the dash panel 40 from the vehicle interior so that the stud bolts 41 which are provided in the dash panel 40 and protrude toward the vehicle interior are inserted through the fixed holes 31A and 31B formed through the flange portion 31 and the fixed nuts 32 are fastened to the stud bolts 41 so as to fix the assembly to the dash panel 40, the fixing operation is easy.

Further, the pedal box 20 further includes the brake booster 23 which transmits the stepping load of the brake pedal 21 to the push rod 14 while changing the amplification factor thereof. For this reason, since the pedal box 20 is provided with the brake booster 23, there is no need to provide an electric motor which is provided in an electric automobile or a hybrid vehicle so as to generate a negative pressure. Further, since the brake booster 23 is used instead of the master vac attached to the gasoline engine automobile, the brake pedal device 1 according to the embodiment may be also applied to the gasoline engine automobile. Further, since the brake booster 23 may transmit the stepping load of the brake pedal 21 to the push rod 14 while changing the amplification factor thereof, a desired amplified force may be transmitted to the push rod 14.

Further, the brake booster 23 is the link mechanism. Thus, a desired lever ratio may be obtained by appropriately changing the positions of the support shaft 24, the first support shaft 232, the second support shaft 234, the third support shaft 237, and the fourth support shaft 235 of the link mechanism, and hence a desired amplified force may be transmitted to the push rod 14.

Further, as described above, the method of attaching the brake pedal device 1 according to the embodiment is a method of attaching the brake pedal device 1 to the dash panel 40 including: inserting at least a part of the master cylinder 10 of the assembly in the axial direction through the penetration hole 40A of the dash panel 40 from the vehicle interior and fixing the fixed portion 30 to the dash panel 40 from the vehicle interior so that the brake pedal device 1 is fixed to the dash panel 40 from the vehicle interior. For this reason, it is possible to provide the method of attaching the brake pedal device 1 which may be easily attached by one worker.

Further, since the brake pedal device 1 according to the embodiment does not include the master vac, the degree of freedom in attachment space with respect to the dash panel 40 is improved, and hence the position of the brake pedal may be changed by appropriately changing the position of the penetration hole 40A of the dash panel 40. Accordingly, even different kinds of vehicles may use the same brake pedal device 1, and hence the productivity is improved.

### <Second Embodiment>

Next, a second embodiment of the invention will be described. Only the characteristic point of the second embodiment will be described by omitting the description of the common point of the first embodiment. Furthermore, the same reference signs will be given to the same components as those of the first embodiment, and the repetitive description thereof will not be presented. The second embodiment is different from the first embodiment in that an auxiliary assembly 3 is formed by integrating a master cylinder 510, a bracket portion 522, and a fixed portion 530 with one another.

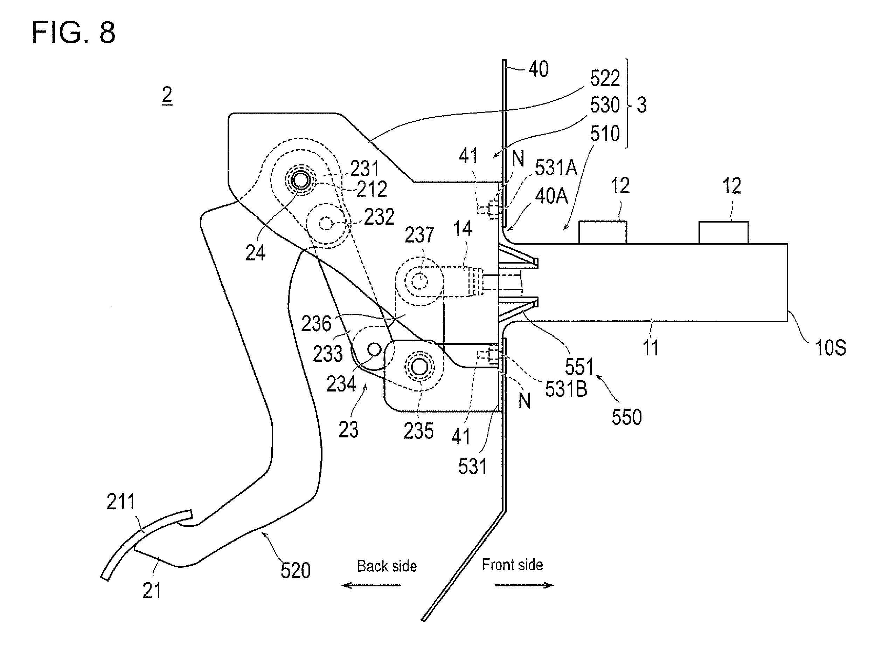

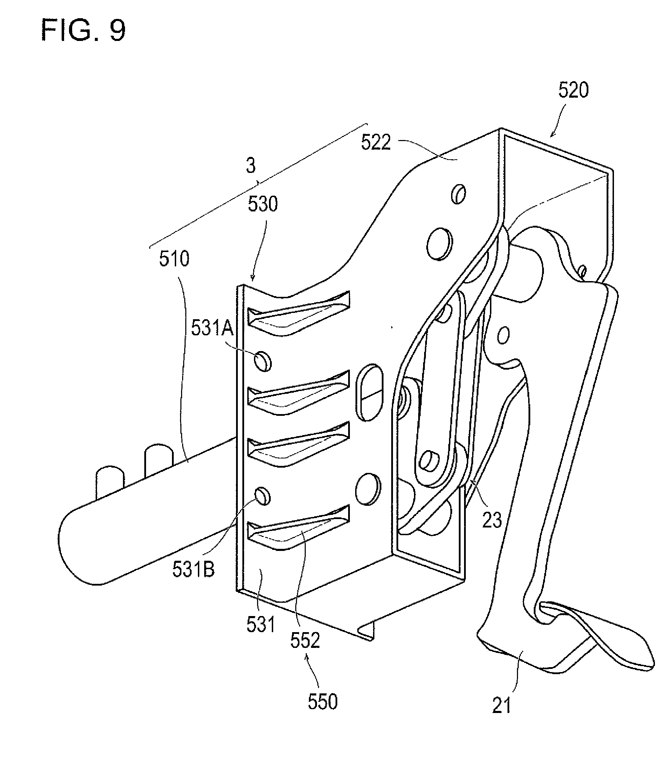

Fig. 8 is a diagram illustrating a brake pedal device 2 according to the second embodiment of the invention. Fig. 9 is a perspective view illustrating an assembly according to the embodiment.

In general, as shown in Figs. 8 and 9, the brake pedal device 2 according to the embodiment includes a master cylinder 510 which holds the push rod 14 for generating the brake liquid pressure, a pedal box 520 which rotatably and axially supports the brake pedal 21 to the bracket portion 522, and a fixed portion 530 which is fixable to the dash panel 40, provided with the penetration hole 40A through which the master cylinder 510 is insertable, from the vehicle interior. Hereinafter, this configuration will be described in detail.

The master cylinder 510, the bracket portion 522, and the fixed portion 530 form the auxiliary assembly 3 in which these members are integrated by aluminum die-casting. Then, as shown in Fig. 9, the auxiliary assembly 3 configures an assembly when the brake pedal 21 and the push rod 14 are connected one another.

The fixed portion 530 includes a flange portion 531 which is fixed to a rear end side position of the master cylinder 510 in relation to the front end 10S as the front end side position of the master cylinder in the insertion direction of the master cylinder with respect to the penetration hole 40A. Further, stud bolts 41 are inserted through hole portions 531A and 531B formed through the flange portion 531, and fixed nuts N are coupled to the inserted stud bolts 41 so as to fix the fixed portion 530 to the dash panel 40. Furthermore, in the embodiment, the stud bolts 41 serve as the first coupling members and the fixed nuts N serve as the second coupling members.

The hole portions 531A and 531B may be formed at the same time when the auxiliary assembly 3 is formed by aluminum die-casting or may be formed by cutting the flange portion 531 of the auxiliary assembly 3 formed by aluminum die-casting.

Further, as shown in Figs. 8 and 9, the brake pedal device 2 is provided with a reinforcement portion 550 which improves the reinforcement strength if necessary. The reinforcement portion 550 includes a first reinforcement portion 551 which is provided between the master cylinder 510 and the fixed portion 530 and a second reinforcement portion 552 which is provided between the bracket portion 522 and the flange portion 531 of the fixed portion 530. Furthermore, the reinforcement portion 550 may be formed at the same time when the auxiliary assembly 3 is formed by aluminum die-casting or may be separately fixed to the auxiliary assembly 3 formed by aluminum die-casting. The fixing method is, for example, welding, but the invention is not limited thereto. Further, the arrangement position or the number of the reinforcement portions 550 is not particularly limited, and may be arbitrarily set.

The brake pedal device 2 according to the second embodiment is attached to the dash panel 40 according to substantially the same attachment method as the first embodiment.

As described above, in the brake pedal device 2 according to the embodiment, the master cylinder 510, the bracket portion 522, and the fixed portion 530 integrally form the auxiliary assembly 3. The dash panel 40 includes the stud bolts 41 which protrude toward the vehicle interior. The fixed portion 530 includes the flange portion 531 which is fixed to the rear end side position of the master cylinder 510 in relation to the front end 10S as the front end side position of the master cylinder in the insertion direction of the master cylinder with respect to the penetration hole 40A. The stud bolts 41 are inserted through the hole portions 531A and 531B formed through the flange portion 531 and the fixed nuts N are coupled to the inserted stud bolts 41 so as to fix the fixed portion 530 to the dash panel 40. For this reason, since the precision of the auxiliary assembly 3 is improved, it is possible to provide the highly precise brake pedal device 2.

Further, the auxiliary assembly 3 is integrally formed by aluminum die-casting. For this reason, it is possible to provide the brake pedal device 2 which is decreased in weight and cost.

Furthermore, the invention is not limited to the above-described embodiments, and may be modified into various forms within the scope of claims.

For example, in the first and second embodiments, the fixed portion 30 or 530 was fixed to the dash panel 40 while the master cylinder 10 or 510 was inserted through the penetration hole 40A. However, the fixed portion 30 or 530 is fixable to the dash panel 40 while at least a part of the master cylinder 10 or 510 in the axial direction is inserted through the penetration hole 40A.

Further, in the first embodiment, the fixed portion 30 was coupled to the bracket portion 22 by the coupling bolt B and the nut. However, the fixed portion 30 may be coupled to the bracket portion 22 by welding.

Further, in the first embodiment, the fixed nut 32 was fastened to the stud bolt 41 provided in the dash panel 40 so as to fix the flange portion 31 to the dash panel 40. However, for example, the flange portion 31 is fixed to the dash panel 40 by fastening a bolt to a nut attached to the dash panel 40 or the flange portion 31 is fixed to the dash panel 40 by welding as long as the flange portion 31 is fixable to the dash panel 40.

Further, in the second embodiment, the auxiliary assembly 3 was integrally formed by aluminum die-casting. However, the auxiliary assembly 3 may be integrally formed by casting or cutting. Reference Signs List

- 1, 2:: Brake pedal device
- 3:: Auxiliary assembly
- 10, 510:: Master cylinder
- 10S:: Front end
- 14:: Push rod
- 20, 520:: Pedal box
- 21:: Brake pedal
- 22, 522:: Bracket portion
- 23:: Brake booster
- 232:: First support shaft
- 234:: Second support shaft
- 235:: Fourth support shaft
- 237:: Third support shaft
- 24:: Support shaft
- 30, 530:: Fixed portion
- 31, 531:: Flange portion
- 31A, 31B:: Fixed hole
- 531A, 531B:: Hole portion
- 32, N:: Fixed nut
- 40:: Dash panel
- 40A:: Penetration hole
- 41:: Stud bolt

## Claims

1. A brake pedal device comprising:
a master cylinder which holds a push rod for generating a brake liquid pressure;
a pedal box which rotatably and axially supports a brake pedal to a bracket portion; and
a fixed portion which is fixable to a dash panel, provided with a penetration hole through which the master cylinder is insertable, from a vehicle interior,
wherein the master cylinder, the pedal box, and the fixed portion form an assembly in which these members are integrally connected to one another by connecting the push rod to the brake pedal, and
wherein the assembly is fixable to the dashpanel from the vehicle interior in a manner such that the fixed portion is fixed to the dash panel from the vehicle interior while at least a part of the master cylinder in the axial direction is inserted through the penetration hole.

2. The brake pedal device according to claim 1,
wherein the master cylinder, the bracket portion, and the fixed portion integrally form an auxiliary assembly,
wherein the dash panel includes a first coupling member,
wherein the fixed portion includes a flange portion which is fixed to a rear end side position of the master cylinder in relation to a front end as a front end side position of the master cylinder in the insertion direction of the master cylinder with respect to the penetration hole, and
wherein the fixed portion is fixed to the dash panel in a manner such that a second coupling member is coupled to the first coupling member through a hole portion formed through the flange portion.

3. The brake pedal device according to claim 2,
wherein the auxiliary assembly is integrally formed by aluminum die-casting.

4. The brake pedal device according to claim 1,
wherein the dash panel includes a first coupling member, and
wherein the fixed portion includes a flange portion which is fixed to a rear end side position of the master cylinder in relation to a front end as a front end side position of the master cylinder in the insertion direction of the master cylinder with respect to the penetration hole, a fixed hole which is formed through the flange portion, and a second coupling member which is coupled to the first coupling member through the fixed hole.

5. The brake pedal device according to any one of claims 1 to 4,
wherein the pedal box further includes a brake booster which transmits a stepping load of the brake pedal to the push rod while changing the amplification factor thereof.

6. The brake pedal device according to claim 5,
wherein the brake booster is a link mechanism.

7. A method of attaching the brake pedal device according to any one of claims 1 to 6 to the dash panel, comprising:
inserting at least a part of the master cylinder of the assembly in the axial direction through the penetration hole of the dash panel from the vehicle interior; and
fixing the fixed portion to the dash panel from the vehicle interior so as to fix the brake pedal device to the dash panel from the vehicle interior.
